# EUROPEAN PATENT APPLICATION

(11) **EP 2 509 292 A1**
(43) Date of publication of application: **10.10.2012**
(21) Application number: 11161393.1
(22) Date of filing: 06.04.2011
(51) Int. Cl.: H04M 1/725, G06F 3/023, G06F 3/14

(54) **Remote user input**

(71) Applicant: Research In Motion Limited, Waterloo, ON N2L 3W8 (CA)
(72) Inventor: Kalu, Kalu Onuka, Waterloo Ontario N2L 3L3 (CA)
(74) Representative: Fennell, Gareth Charles

(57) **Abstract**

Systems and methods on a handheld electronic device (102), such as a Smartphone, that receive human interface device input (302, 310), performs text entry processing functions on that input to determine text display characters to present to a user (304), presents those text display characters on the handheld electronic device (102), and sends data (308) reflecting the user's input through a conventional human interface device (HID) interface to a remote device (130). Text entry processing, such as auto-complete, auto-correct, predictive text entry, that a user configures on one device can be used for text entry on any device with a conventional HID interface. The user's input is reflected on both the handheld electronic device (120) used to enter the input and also on a display (132) of the remote device (130).

## Description

### FIELD OF THE DISCLOSURE

The present disclosure generally relates to coupling user interface input devices to electronic devices and more particularly to accepting a user's input, processing that input, and providing data produced by the processing to a remote processor.

### BACKGROUND

Electronic processing devices, such as various types of computers, Smartphones, personal electronic devices, and the like, allow a user to enter data through various human interface devices. Human interface devices, such as keyboards, pointing devices such as track balls, mice, and touchpads, are coupled to the electronic processing devices to provide electronic signals indicating the user's input. It is common for a user of these human interface devices to erroneously provide an unintended input. For example, a user of a keyboard sometimes presses a wrong key or an additional key and thereby sends incorrect or unintended characters to the electronic processing device.

Portable electronics, such as Smartphones, tablet computers, and the like, generally have smaller or unconventional human interface devices that are more susceptible to causing erroneous inputs. Further, portable electronic devices may be used while a user is, for example, standing or in a position that makes use of a human interface device difficult, thereby resulting in further erroneous inputs. Some portable electronic devices process the data reflecting the user's input to the human interface device to predict the user's intended input or to attempt to correct suspected errors in the input.

Keyboards, for example, are typically simple devices that do not have their own display to provide a direct visual feedback. A user presses keys on a keyboard and then verifies the accuracy of the data provided to the target device to which the keyboard is connected by analyzing the output produced by the keyboard on a display of the target device. Wireless human interface devices, such as Bluetooth^{®} keyboards, are sometimes used when a user is, for example, positioned in such a way relative to the target device that the display of the target device is not easily or conveniently analyzed. Wireless human interface devices are also susceptible to not having all of a user's input received by the target device due to fluctuations in wireless signal strength received by the target device.

Therefore, the effectiveness or ease of use of human interface input devices can be limited by only reflecting user's input on a target device that receives data from the human interface input device.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 is illustrates a Smartphone keyboard to remote system connection, in accordance with one example;

FIG. 2 is a local device block diagram, in accordance with one example;

FIG. 3 is a human interface device command generation process, according to one example; and

FIG. 4 is a block diagram of an electronic device and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defined as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically. The term "configured to" describes hardware, software or a combination of hardware and software that is adapted to, set up, arranged, built, composed, constructed, designed or that has any combination of these characteristics to carry out a given function. The term "adapted to" describes hardware, software or a combination of hardware and software that is capable of, able to accommodate, to make, or that is suitable to carry out a given function. In general, the term "handheld device" refers to any device that is sized, shaped and designed to be held or carried in a human hand.

Described below are systems and methods that receive a user's input through a human interface device and that present the results of that user's input on a display of a device associated with the human interface device and that also send data reflecting the user's input through a human interface device (HID) interface to a remote device. Examples include HID interfaces based upon the Universal Serial Bus (USB) or the Bluetooth® wireless interface definitions.

In one example, a user enters input, such as user keyboard inputs, using the human interface devices of a smart phone or similar electronic device and a processor within the smart phone or similar device processes the user's input. The processor implements one or more text entry processing functions configured for the smart phone or similar device and determines, based on the user's input through the human interface devices, text display characters to present to the user. In one example, the text entry processing functions of the smart phone or similar device allow a user to use the familiar and convenient text entry processing of the smart phone with other electronic processing devices, such as a tablet computer, desktop computer, or other electronic device.

Smart phones and other portable electronic devices often include text entry processing functions that assist a user of a keyboard in efficiently and accurately entering data. Keyboards on smart phones and other portable electronic devices are often small and users sometimes use these keyboards in adverse physical conditions such as in moving vehicles, crowded locations, and under other such conditions. The raw data entered under such adverse conditions, or even under more benign conditions when using a small keyboard, often contains errors. Some text entry processing functions, such as auto-completion, allow a user to enter full words without typing all of the letters. Performing auto-completion of input for a user of a small keyboard commonly found on smart phones or other portable devices is particularly helpful to a user and provides further convenience even when compared to performing them on conventional computers.

Another text entry processing function performed by some smart phones and similar devices is an "auto-text" function that responds to a user's entry of one of a number of configured sequences of characters. The processor recognizes a user's entry of a configured sequence of characters and replaces that sequence with another sequence of text characters. One example of auto-text functions is replacing the sequence "hte" with the sequence "the" in order to correct a common typographical error. Another use of auto-text allows a user to enter a sequence defined by the user, such as "mypin:" or other defined sequence, and the processor automatically replaces that sequence with the actual personal identification number ("PIN") that has been configured by the user.

In various examples, the text entry processing functions of a smart phone or similar device are customized by or adapted to an individual user over time. In the above example, auto-text configurations are entered by a user over time and can contain definitions of a large number of text replacements that are programmed by a user. Other text entry processing functions may adaptively determine likely suggestions, replacements, or other sequences of text display characters to present for a particular user. For example, auto-complete functions may learn over time and use some of the likely words or terms that the user is entering and provide these expected inputs to the user earlier or more prominently than for other users. As a user configures a smart phone or other device to better respond to his or her common errors or to provide personalized text replacements for terms such as "mypin:" and the like, the user often desires to use this familiar and convenient input device as an input for other devices, such as when using a tablet computer, conventional computer, or any other device that accepts text input.

In an example, the below described systems and methods allow a user to also use his or her smart phone or similar device as a human interface input device for other electronic devices, such as a tablet computer, desktop computer, or any other device. In one example, the smart phone accepts and processes user inputs through its human interface devices and determines text display characters to present to the user on the display of that device. The smart phone or similar device is also in communications with another remote processing device, such as a tablet computer, through a human interface device (HID) communications interface, such as a USB or Bluetooth^{®} interface. The smart phone or similar device produces HID commands or messages that conform to the conventional data protocol defined for the HID communications interface. These HID commands or messages are transmitted to the remote device over the HID communications interface. In one example, these HID commands and messages contain text display control information to not only present printable text or graphics characters but to also cause changes on the display such as the erasing or replacing of characters. In one example, these HID commands or messages are sent substantially simultaneously or in response to text manipulation occurring on the display of the smart phone or other device.

In one example, conventionally defined human interface device (HID) commands or messages are communicated over the human interface device communications interface. These HID commands and messages are defined by interoperability organizations, such as the HID interfaces defined for the USB and Bluetooth^{®} interfaces. By using conventionally defined HID commands or messages, no modification of the remote device is required. In particular, any remote device with a USB or Bluetooth^{®} interface and associated interface driver software that complies with the generally defined HID profile for either or both of those interfaces is able to receive and properly interpret the HID commands or messages sent over the HID interface and properly replicate the display of the text display characters derived from the user's input.

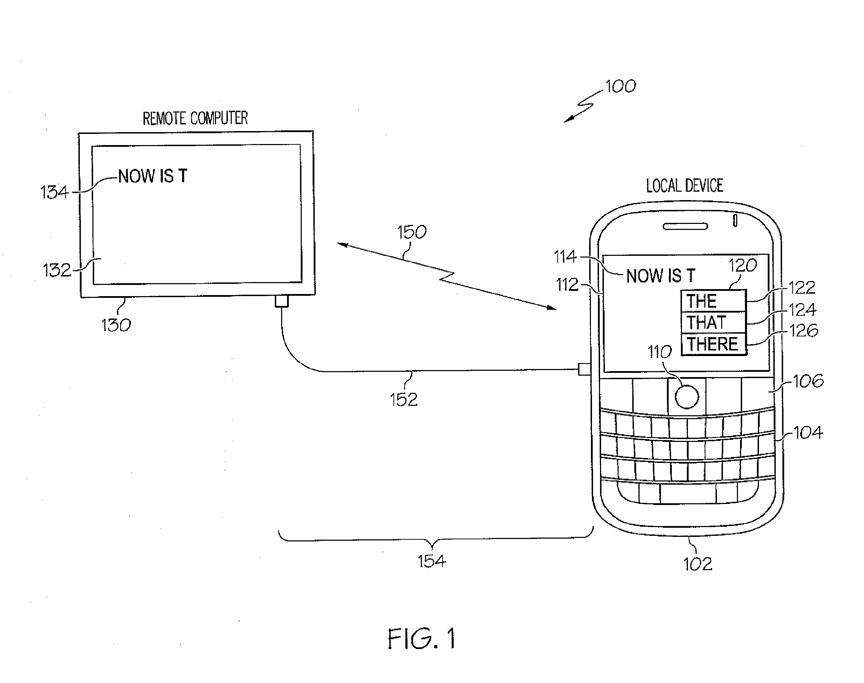

FIG. 1 is illustrates a Smartphone keyboard to remote system connection 100, in accordance with one example. The Smartphone keyboard to remote system connection 100 depicts a local device 102, such as a Smartphone or similar device, with various human interface devices. The local device 102 is connected to a remote computer 130 through data communications interfaces, such as conventional Human Interface Device (HID) communications links 154. Examples of HID communications links 154 include a Universal Serial Bus (USB) communications link 152 and a Bluetooth^{®} communications link 150. In the operation of the Smartphone keyboard to remote system connection 100, a user enters keystrokes as user keyboard inputs or enters other input signals through the human interface devices of the local device 102 and data derived by processing within the local device 102 is communicated to the remote computer. In one example, the derived data is communicated using conventional human interface device communications links and profiles or protocols defined by the interface standards for the applicable communications link of the conventional links 154.

The local device 102 has a keyboard 104 that a user is able to use to enter text data. As described above, the local device 102 of one example performs text entry processing functions on the keypresses entered by a user on the keyboard 104. These text entry processing functions include, for example, auto-complete, auto-correction, spell-checking, and other processing. In one example, the keyboard 104 is able to have multiple alphanumeric characters assigned to each key. The text entry processing of this example uses a multiple character key resolution function to estimate or determine which alphanumeric character is intended by the user when pressing a particular key. In one example, a keyboard 104 is a telephone style numeric keypad that has three or four letters assigned to each key. Another example is a keyboard that has two letters assigned to each key, such as a Suretype^{®} keyboard used on devices produced by Research In Motion Limited of Waterloo, Ontario, Canada. In a case of a keyboard 104 that has two characters associated with each key, the local device 102 includes text entry processing to estimate the user's intended entry.

After processing the user input, the text entry processing produces a sequence of text display characters that are to be displayed to the user. In various examples, the sequence of text display characters is converted into a sequence of human interface device commands that cause a presentation of the desired display to be displayed on the remote device. The desired display reflects the user input and any other derived data produced by the text entry processing, such as drop-down boxes, word corrections, and the like. Communicating the human interface device commands to the external device using a conventional human interface device communications link, including by using conventional human interface device communications profiles or protocols, allows a user to use the keyboard 104 of the local device 102 as a keyboard for any remote computer 130 that has a conventional driver for the conventional links 154.

The Smartphone keyboard to remote system connection 100 allows the local device 102 to be used with a large number of unmodified and un-customized remote devices. The connection between the local device 102 and the remote computer 130 is established by the normal connection techniques for connecting human interface devices to the remote computer 130. For example, simply connecting a USB cable between the local device and the remote computer 130 will establish the connection and allow for immediate use. For a Bluetooth^{®} connection, the usual pairing of the local device 102 as a human interface device with the remote computer 130 will also allow for the immediate use of the local device 102 as a human interface device for the remote computer. The enhanced text entry capabilities described above are then also immediately available to a user of the local device 102 in entering data into the remote computer 130.

The local device 102 has additional human interface devices. A display 112 is a human interface output device that displays text, graphics, or combinations of text and graphics to a user of the local device 102. A number of function keys 106 are located above the keyboard 104 and are used to provide further controls for a user. A pointing device 110 is also located above the keyboard 104 and is used to allow a user to move a cursor or pointer on the display 112. The pointing device 110 is able to be any type of input device to control locating an indicator on the display 112. In various examples, pointing device 110 is able to be a touch pad, pointing stick, joystick, track ball, or any other device that allows a user to indicate one-dimensional or two-dimensional movement.

The illustrated display 112 of the local device 102 depicts a sequence of text display characters 114. The sequence of text display characters 114 has been derived by processing within the local device 102 based upon keystroke inputs entered by a user onto the keyboard 104. In the illustrated example, the user has entered a text string "NOW IS T" and that string is displayed on the display 112 as part of a local text display characters 114. The processing of the local device augments the entered keystroke data entered by the user by adding a local drop down box 120 to the local text display characters 114. The drop down box 120 depicts a list of suggestion auto-completion words based on the user entered keystrokes. Each of the items in this list is a selection displayed to the user, and each suggested auto-completion is a replacement text that replaces, upon its selection by the user, selected text elements on the display. In this example, the last entered keystrokes are a "space" and the letter "T." The letter "T" is the selected text to be replaced by a selection of the drop-down box 120, and upon selection of one of those words, the "T" is replaced with the selected replacement word. Based on the preceding words entered by the user and other possible factors used in the auto-completion algorithm of the local device 102. The drop down box 120 in this example illustrates three possible words that the auto-correction algorithm has selected to present to the user. The three possible words are "THE" 122, "THAT" 124, and "THERE" 126. A user is able to select one of these suggested words, such as by pressing a specified key on the keyboard 104.

In response to the user selecting one of these suggested words, the processing of the local device 102 accepts the user input corresponding to that selection and modifies the display presented on the display 112 of the local device 102. In one example, the processing determines commands to place in the sequence of text display characters that, for example, define the location at which text or graphics are to be presented. The sequence of text display characters is also able to include text over-writing commands. The text over-writing commands specify altering the local presentation of the sequence of text display characters by replacing at least one text display character occurring prior to the text over-writing command with at least one replacement text display character that follows the text over-writing command.

The remote computer 130 includes a remote display 132 on which the sequence of text display characters is also presented, as the remote text display characters 134. As described above, the local device 102 is connected to the remote computer 130 as a Human Interface Device (HID) through a conventional HID communication link 154, such as the USB communications link 152 or the Bluetooth^{®} communications link 150. The Bluetooth^{®} communications link 150 is an example of a short range communications link. As shown, the remote text display characters 134 are the characters that a user enters through the human interface devices of the local device 102. The remote text display characters 134 are replicas of the local text display characters 114 displayed on the display 112 of the local device 102. In one example, the remote text display characters 134 are the characters or words that the user selects on the local device 102, including through the use of text entry processing functions performed by the processing of the local device 102 on the keypresses entered by a user on the keyboard 104. In the example of the above described illustrated display 112, the remote text characters 134 include the word selected through the suggestions presented in the drop down box 120. In the above described example, if the user selects the "THAT" 124 suggestion in the drop-down box 120, the remote text characters 134 will display "NOW IS THAT" as is displayed on the local device 102. In some examples, the drop-down box 120 is not replicated on the remote display 132, but only the user's selection from such drop down boxes or other text entry processing functions is displayed.

The local device 102 sends a sequence of HID commands or packets, as is defined by the HID protocol or HID profile for the conventional HID communications link 154, to the remote computer 130. This sequence of HID commands or packets contain a sequence of human interface device commands that are determined by the local device 102 to cause the remote device to display the sequence of text display characters.

In one example, the sequence of HID commands or packets are sent substantially contemporaneously over the conventional HID communications link 154 with the display, as the local text display characters 114, of the sequence of text display characters on the text display characters 114 of the local device 102. In other words, displaying the sequence of text display characters on each of the local device 102 and the remote computer 130 occurs almost simultaneously, however there may be some temporal separation of the displaying on the remote device due primarily to transmission delays over the HID communications link 154. In most instances, the effects of any delay will not be noticed by the user. Substantially contemporaneously sending the sequence of HID commands to the remote computer 130 and displaying the sequence of text display characters on the text display characters 114 results in the remote display 132 of the remote computer 130 appearing to echo the display 112 of the local device 102.

The illustrated remote display 132 is shown to display the remote sequence of text display characters 134, which includes the text string "NOW IS T" as is contained in the sequence of text display characters 114 displayed on the display 112 of the local device 102. The contents of the remote display characters 134 in this example are created only based upon conventional HID commands or messages that are generated by the processing of the local device 102 and are communicated over one or both of the conventional HID communications links 154.

In one example, the conventional links 154 have conventional protocols that define display location commands. Display location commands specify a location on the remote display 132 at which text or graphical characters are to be placed. Further, the conventional links 154 have conventional protocols that define over-writing human interface device commands. The text over-writing human interface device commands specify altering the remote presentation of the sequence of text display characters by replacing at least one text display character presented on the remote display 132 with the at least one replacement text display character. In general, the sequence of human interface device commands is able to cause a remote presentation on the remote display 132 of the remote computer 130 to match part or all of the presentation on the display 112 of the local device 102.

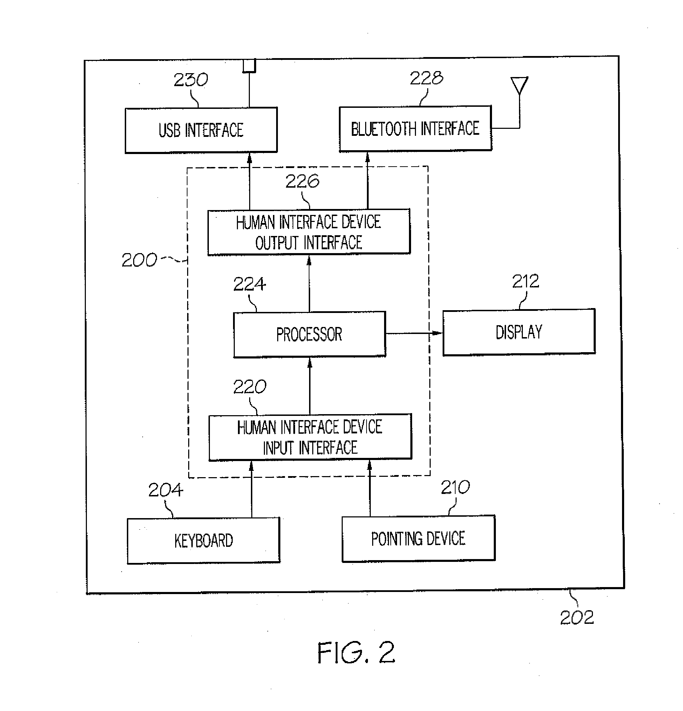

FIG. 2 is a block diagram of a local device 202 including a human interface device controller 200, in accordance with one example. In one example, the block diagram of the local device 202 including the human interface device controller 200 is an example of a block diagram for a local device 102, discussed above. The block diagram shows a local device 202 that includes a keyboard 204 and a pointing device 210. The keyboard 204 in this example corresponds to the keyboard 104 and the pointing device 210 corresponds to the pointing device 110 of the local device 102.

The human interface device controller 200 includes a human interface device input interface 220. The human interface device input interface 220 accepts input from the keyboard 204 and the pointing device 210 that reflect, for example, user keystrokes on the keyboard 204 and a user's manipulation of the pointing device 210. The human interface device input interface 220 accepts these inputs from the human interface devices of the local device 202 and provides data indicating those inputs to a processor 224.

The processor 224 performs general processing to support operations of the local device 202. As is described in further detail below, the processor 224 performs processing to support, for example, data and voice communications through the local device 202, performs processing to implement user applications and other functions of the local device 202, and implements processing to interpret user keystrokes on the keyboard 204 and provide text, graphics, or a combination of text and graphics for presentation to a user on the display 212.

The processor 224 of one example defines a screen image to present to a user and conveys a definition of that screen image to the display 212. The definition of the screen image conveyed to the display 212 is able to be in any form, such as a bit-mapped definition, cursor addressing information, or the like. In the example discussed with regards to FIG. 1, the processor 224 determines a sequence of text display characters to display on the display 212. The processor 224 further determines a sequence of human interface device commands that also specify displaying the sequence of text display characters.

The processor 224 provides the determined sequence of human interface commands to a human interface device output interface 226. The human interface device output interface 226 of one example is able to provide the sequence of human interface commands to one or both of a USB interface 230 and a Bluetooth^{®} interface 226. The USB interface 230 and the Bluetooth^{®} interface 226 communicate the sequence of human interface commands to an external device, such as the remote computer 130 described above, over a respective HID communications link, such as the USB communications link 152 and the Bluetooth^{®} communications link 150, described above with regards to FIG. 1.

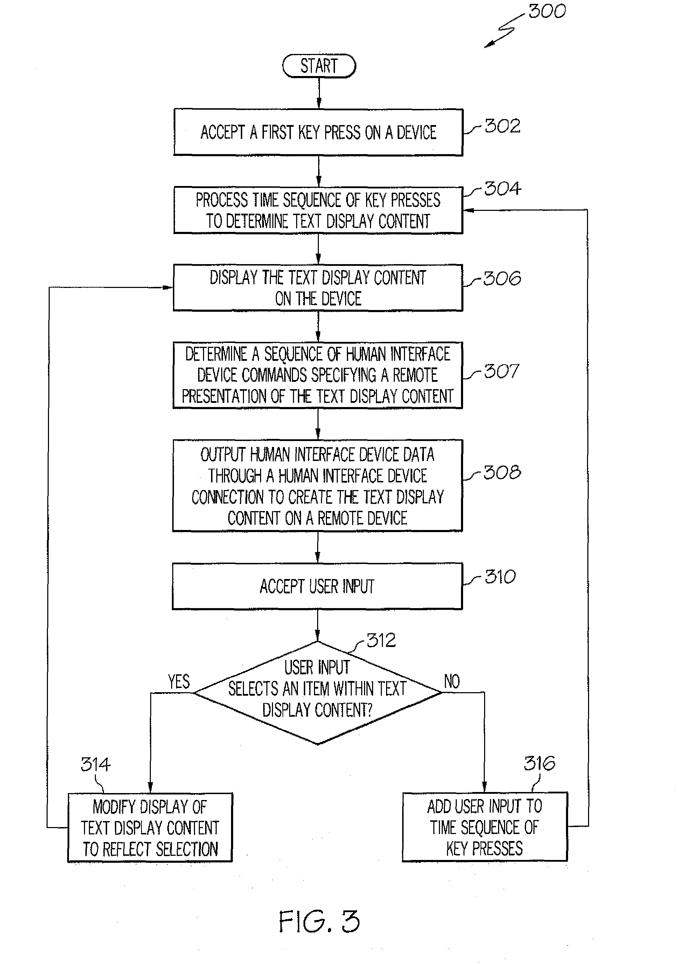

FIG. 3 is a human interface device command generation process 300, according to one example. The human interface device command generation process 300 is an example of a process performed by the processor 224 of the human interface device controller 200 discussed above with regards to FIG. 2. The human interface device command generation process 300 is also an example of a processing performed by a local device 102 discussed above with regards to FIG. 1.

The human interface device command generation process 300 begins with the human interface device controller 200 accepting, at 302, a first keypress on a device. The keypress is generally performed by a user of the local device 102 pressing a key on the keypad 104. In general, the human interface device command generation process 300 operates on a time series of keypresses, where the user presses a number of keys on, for example, keyboard 104. The human interface device command generation process 300 begins with a first keypress, at 302, and additional keypresses are added to a time sequence of keypresses later, as is described below.

The human interface device command generation process 300 continues with the human interface device controller 200 processing, at 304, the time sequence of keypresses to determine text display content. For example, the human interface device command generation process 300 is able to include performing auto-complete, auto-correction, predictive word suggestions, and the like based on the time sequence of keypresses. The determined text display content is determined based upon these keypresses. An example of text display content is illustrated above as the local sequence of text display characters 114, which includes the text string " NOW IS T" that reflect the actual keypresses made by the user. Additional text display content including the drop-down box 120, which includes three suggested words, is added by the processing of one example.

The human interface device controller 200 displays, at 306, the text display content on the device associated with the keypad upon which the user is performing keypresses. As discussed above, the text display content is determined on a processor 224 and displayed on the display 212 by any suitable technique. The text display content is displayed on the display 212 substantially concurrently with accepting the sequence of the plurality of keystrokes at 302 and 316 (discussed below). In other words, any lag in display time is unnoticeable by or inconsequential to the user. At 307, the human interface device controller 200 determines, at the handheld device and based on the sequence of the plurality of keystroke inputs, a sequence of human interface device commands specifying a remote presentation of the sequence of text display characters.

The human interface device controller 200 also outputs, at 308, human interface device data through a human interface device connection, where the human interface device data creates the text display content on a remote device that receives the human interface device data. As discussed above, the human interface device data is able to include conventional human interface device commands defined for the human interface device communications link being used. For example, conventional Bluetooth® HID commands are generated during the human interface device command generation process 300 and communicated to a remote device. In this example, the remote device does not require customization or a modified human interface device driver in order to accept and properly display the human interface device data that is determined during the human interface device command generation process 300.

The human interface device command generation process 300 continues with the human interface device controller 200 accepting, at 310, user input. User input is able to be in the form of additional keypresses by the user. Other user input is able to be, for example, pointing device input to move a cursor. Further user input is able to be an input that selects a highlighted option displayed to the user. For example, an input is able to select one word of the three suggested words presented in the drop-down box 120.

The human interface device controller 200 determines, at 312, if the user input accepted at 310 selects an item within the text display content. Such a selection is able to be, as discussed above, a selection of an option within a drop down box 120. In the case where the user input does select an item within the text display content, the human interface device command generation process 300 modifies, at 314, the display of text display content to reflect the selection. For example, in the case of selecting a suggested auto-completion word in the drop-down box 120, the text display content replaces the letter "T" in the local sequence of text display characters 114 with the selected word. As discussed above, text display content is displayed on both the display 112 of the local device 102 and is also displayed on the remote display 132. These modifications are ultimately reflected on both of these displays. The human interface device command generation process 300 then returns to displaying, at 306, the text display content on the device, and outputting, at 308, human interface device data to create the modified text display content.

Returning to decision block 312, in the case where the user input does not select an item within the text display content, the human interface device command generation process 300 continues with the human interface device controller 200 adding, at 316, the user input accepted at 310 to the time sequence of keypresses. The human interface device command generation process 300 then continues with the human interface device controller 200 returning to processing, at 304, the time sequence of keypresses to determine text display content.

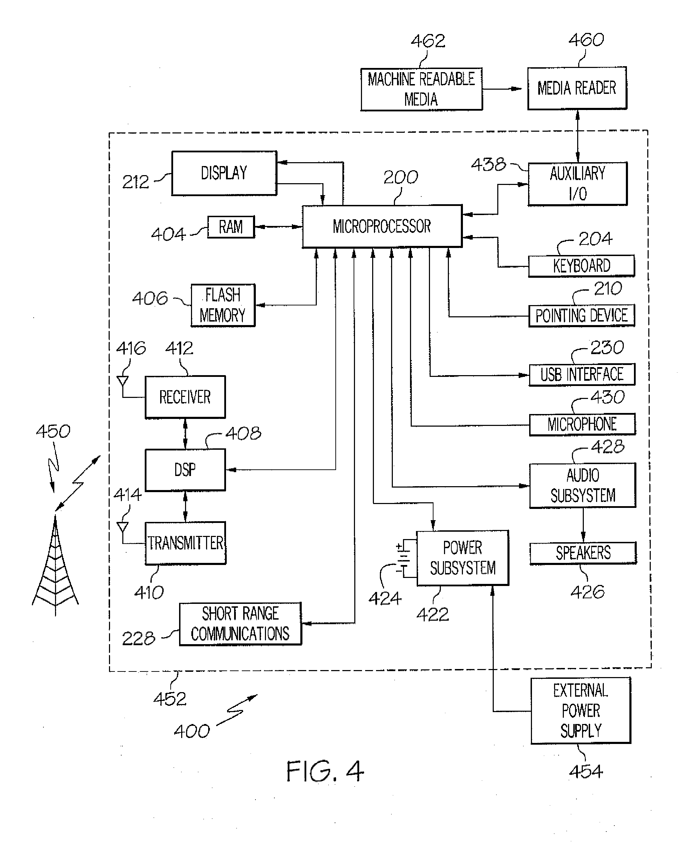

FIG. 4 is a block diagram of an electronic device and associated components 400 in which the systems and methods disclosed herein may be implemented. In this example, an electronic device 452 is a wireless two-way communication device that is able to provide one or both of voice and data communications capabilities. The electronic device 452 is an example of a local device 102 or a local device 202, discussed above. Such electronic devices communicate with a wireless voice or data network 450 via any suitable wireless communications protocol or protocols. Wireless voice communications are performed using either an analog or digital wireless communications protocols according to the network 450 to which it is connected. Data communications to and from the electronic device 452 support exchanging data with other computer systems through any suitable network, such as the Internet. Examples of electronic devices that are able to incorporate the above described systems and methods include data pagers, data messaging devices, cellular telephones, or a data communication device that may or may not include telephony capabilities.

The illustrated electronic device 452 is an example electronic wireless communications device includes two-way wireless communications component to provide wireless data communications with a wireless data network, a wireless voice network, or both. Such electronic devices incorporate communication subsystem elements such as a wireless transmitter 410, a wireless receiver 412, and associated components such as one or more antenna elements 414 and 416. A digital signal processor (DSP) 408 performs processing to extract data from received wireless signals and to generate signals to be transmitted. The particular design of the communication subsystem is dependent upon the communication network and associated wireless communications protocols with which the device is intended to operate.

Data communications with the electronic device 452 generally includes receiving data, such as a text message or web page download, through the receiver 412 and providing that received data to the human interface device controller microprocessor 200. The human interface device controller microprocessor 200 is then able to further process the received data for output to the display 212 or to other devices such as an auxiliary I/O device 438 or through the USB interface 230 or short range wireless communications system or Bluetooth interface 228.

The electronic device 452 also allows a user to compose data items, such as e-mail messages, using a keyboard 204 and pointing device 210 in conjunction with the display 212 and possibly an auxiliary I/O device 438. Composing items using the keyboard 204 in some examples includes using text entry processing functions, as are descried above. Such composed items are then able to be transmitted over a communication network through the transmitter 410.

The electronic device 452 performs voice communications by providing received signals from the receiver 412 to the audio subsystem 428 for reproduction by speakers 426. A user's voice is able to be converted to electrical signals microphone 430. Those electrical signals are then transmitted via transmitter 410.

A short-range communications subsystem or Bluetooth interface 228 is a further optional component which may provide for communication between the electronic device 452 and different systems or devices. For example, the short-range communications subsystem or Bluetooth interface 228 may include an infrared device and associated circuits and components or a Radio Frequency based communication module such as one supporting Bluetooth^{®} communications, to provide for communication with similarly-enabled systems and devices. The short range communications subsystem or Bluetooth interface 228 in some examples provides a human interface device communications link, as is described above.

The electronic device 452 includes a human interface device controller microprocessor 200 that controls device operations for the electronic device 452. The human interface device controller microprocessor 200 interacts with the above described communications subsystem elements to implement and control wireless communications with the network 450. The human interface device controller microprocessor 200 of one example includes the above described human interface device input interface 220, human interface device output interface 226 along with the processor 224. The human interface device controller microprocessor 200 also performs the human interface device command generation process 300, described above. The human interface device controller microprocessor 200 further performs control and data exchange functions by interacting with, for example, flash memory 406, random access memory (RAM) 404, auxiliary input/output (I/O) device 438, USB Interface 230, display 212, keyboard 204, audio subsystem 428, microphone 430, a short-range communications subsystem or Bluetooth interface 228, a power subsystem 422, and any other device subsystems.

Display 212 is a human interface input device that is able to include touch sensors to accept touch screen inputs from a user, such as scrolling gestures, and the like. Display 212 may also be a flexible display system capable of creating inputs through movements, such as bending, flexing or twisting, etc. the actual display 212. The keyboard 204 is able to include, for example, a complete alphanumeric keyboard, a telephone-type keypad, a touch screen representation of a keyboard, or any type of keyboard that is able to accept user input. A pointing device 210 is also a human interface input device that allows a user to control, for example, a movable cursor or other user interface object presented on the display 212.

An internal power pack, such as a battery 424, is connected to a power subsystem 422 to provide power to the circuits of the electronic device 452. The power subsystem 422 includes power distribution circuitry to supply electric power to the various components of the electronic device 452 and also includes battery charging circuitry to support recharging the battery 424. An external power supply 454 is able to be connected to the power subsystem 422. The power subsystem 422 includes a battery monitoring circuit that provide a status of one or more battery conditions, such as remaining capacity, temperature, voltage, current draw, and the like.

The USB interface 230 provides data communication between the electronic device 452 and one or more external devices. Data communication through USB interface 230 enables various user data, such as data files or configuration parameters for the electronic device 452 to be exchanged between the electronic device 452 and an external device. In one example, the USB interface 230 is used to send conventional HID commands to a remote device, as is described above. The USB interface 230 is also able to be used to convey external power to the power subsystem 422 from a suitable external power supply.

Operating system software used by the human interface device controller microprocessor 200 is stored in flash memory 406. In addition to, or in place of, flash memory 406, a battery backed-up RAM or other non-volatile storage data elements are able to store operating systems, other executable programs, or both. As an example, a computer executable program configured to perform the human interface device command generation process 300, described above, is included in a software module stored in flash memory 406.

RAM memory 404 is used to store data produced or used by human interface device controller microprocessor 200. RAM memory is further able to temporarily store program data from flash memory 406 or from other storage locations. RAM 404 is also used to store data received via wireless communication signals or through wired communications.

The human interface device controller microprocessor 200 in some examples executes operating system software as well as various other software applications such as user applications, small, special purpose applications referred to as "apps," and the like. Some software, such as operating system and other basic user functions such as address books, personal information managers (PIMs), e-mail applications and the like, are able to be provided as part of the manufacturing process for the electronic device.

In addition to loading applications as part of a manufacturing process, further applications are able to be loaded onto the electronic device 452 through, for example, the wireless network 450, an auxiliary I/O device 438, USB interface 230, short-range communications subsystem or Bluetooth interface 228, or any combination of these interfaces. Once these applications are loaded into the electronic device 452, these applications are executed by the human interface device controller microprocessor 200.

A media reader 460 is able to be connected to an auxiliary I/O device 438 to allow, for example, loading computer readable program code of a computer program product into the electronic device 452 for storage into flash memory 406. One example of a media reader 460 is an optical drive such as a CD/DVD drive, which may be used to store data to and read data from a computer readable medium or storage product such as computer readable storage media 462. Examples of suitable computer readable storage media include optical storage media such as a CD or DVD, magnetic media, or any other suitable data storage device. The media reader 460 is alternatively able to be connected to the electronic device through the USB interface 230 or computer readable program code is alternatively able to be provided to the electronic device 452 through the wireless network 450.

Information Processing System

The subject matter of the present disclosure can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable. A typical combination of hardware and software could be a general purpose computer system with a computer program that, when being loaded and executed, controls the computer system such that it carries out the methods described herein.

The subject matter of the present disclosure can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits. Furthermore, the computer readable medium may comprise computer readable information in a transitory state medium such as a network link and/or a network interface, including a wired network or a wireless network, that allow a computer to read such computer readable information.

Non-Limiting Examples

Although specific embodiments have been disclosed, those having ordinary skill in the art will understand that changes can be made to the specific embodiments without departing from the spirit and scope of the present disclosure. The scope of the subject matter contained in the present disclosure is not to be restricted, therefore, to the specific embodiments, and it is intended that the appended claims cover any and all such applications, modifications, and embodiments within the scope of the present disclosure.

## Claims

1. A method to process user keyboard input, the method comprising:
accepting a sequence (302, 310) of a plurality of keystroke inputs on a handheld device (102);
determining, at the handheld device and based on the sequence of the plurality of keystroke inputs, a sequence of text display characters to present on a screen (304);
displaying on the handheld device in response to the determining, a local presentation of the sequence of text display characters (306) substantially concurrently with the accepting the sequence of the plurality of keystrokes;
determining, at the handheld device and based on the sequence of the plurality of keystroke inputs, a sequence of human interface device commands (307) specifying a remote presentation of the sequence of text display characters; and
sending, from the handheld device to a remote device through a data communications interface conforming to a data communications standard defined for a human interface device, the sequence of human interface device commands (308), the sending being substantially contemporaneous with the displaying the sequence of text display characters.

2. The method of claim 1, the data communications interface comprising a short range communications link (150).

3. The method of claim 1, the determining comprising at least one of an auto-complete function, an auto-correction function, and a multiple character key resolution function (120, 304).

4. The method of claim 1, wherein the sequence of human interface device commands comprises at least one display location command, each at least one display location command indicting a location on the remote presentation at which to present a text display character (120).

5. The method of claim 1, the sequence of text display characters comprising a text over-writing command, the text over-writing command altering the local presentation of the sequence of text display characters by replacing at least one text display character occurring prior to the text over-writing command with at least one replacement text display character that follows the text over-writing command, and
the sequence of human interface device commands comprising at least one text over-writing human interface device command that corresponds to the text over-writing command, the text over-writing human interface device command specifying altering the remote presentation of the sequence of text display characters by replacing the at least one text display character with the at least one replacement text display character.

6. The method of claim 1, wherein the sequence of text display characters comprises a presentation of a plurality of selections to be displayed to the user (120), each selection of the plurality of selections comprising a respective replacement text to replace a selected text element within the text display characters,
the method further comprising:
accepting, at the handheld device, a user input corresponding to selecting a selected selection within the plurality of selections (310);
modifying the local presentation in response to accepting the user input corresponding to selecting (314); and
sending, from the handheld device to the remote device through the data communications interface, a modifying sequence of human interface device commands that specify modifying the remote presentation in response to accepting the user input corresponding to selecting (308).

7. A human interface device controller configured to be located within a handheld device, the human interface device controller comprising:
a human interface device input interface (220) configured to accept a sequence of a plurality of keystroke inputs on a keyboard (104) of the handheld device (102);
a processor (224) configured to:
determine, based on the sequence of the plurality of keystroke inputs, a sequence of text display characters to present on a screen (304); and
determine, based on the sequence of the plurality of keystroke inputs, a sequence of human interface device commands specifying a remote presentation of the sequence of text display characters (307);
a display (112) associated with the handheld device, the display configured to display in response to the processor determining the sequence of text display characters, a local presentation of the sequence of text display characters (114), the display displaying occurring substantially concurrently with the human interface device input interface accepting the sequence of the plurality of keystrokes; and
a human interface device output interface (226) adapted to send, to a remote device through a data communications interface conforming to a data communications standard defined for a human interface device (150,152), the sequence of human interface device commands, the sending being substantially contemporaneous with the displaying the sequence of text display characters.

8. The human interface device controller of claim 7, the human interface device output comprising a short range communications link (150).

9. The human interface device controller of claim 7, wherein the processor is further configured to perform, as at least part of determining the sequence of text display characters, at least one of an auto-complete function, an auto-correction function, and a multiple character key resolution function (120).

10. The human interface device controller of claim 7, wherein the sequence of human interface device commands comprises at least one display location command, each at least one display location command indicting a location on the remote presentation at which to present a text display character,

11. The human interface device controller of claim 7, the sequence of text display characters comprising a text over-writing command, the text over-writing command altering the local presentation of the sequence of text display characters by replacing at least one text display character occurring prior to the text over-writing command with at least one replacement text display character that follows the text over-writing command, and
the sequence of human interface device commands comprising at least one text over-writing human interface device command that corresponds to the text over-writing command, the text over-writing human interface device command specifying altering the remote presentation of the sequence of text display characters by replacing the at least one text display character with the at least one replacement text display character.

12. The human interface device controller of claim 7, wherein the sequence of text display characters comprises a presentation of a plurality of selections to be displayed (120), each selection of the plurality of selections comprising a respective replacement text to replace a selected text element within the text display characters,
the processor further configured to:
accept a user input corresponding to selecting a selected selection within the plurality of selections (310);
modify the local presentation in response to accepting the user input corresponding to selecting (314); and
send, to the remote device through the data communications interface, a modifying sequence of human interface device commands that specify modifying the remote presentation in response to accepting the user input corresponding to selecting (308).

13. A computer program for instructing a computer to perform the method of any one of claims 1, 2, 3, 4, 5, or 6.

## Amended claims

### Amended claims in accordance with Rule 137(2) EPC.

**1.** A method of inputting data on a remote electronic device, the method comprising:
accepting a sequence (302, 310) of a plurality of keystroke inputs on a handheld device (102);
processing, at the handheld device, the sequence of the plurality of keystroke inputs to determine:
a sequence of text display characters to present on a screen (304) of the handheld device; and
a sequence of human interface device commands (307) defined by a data communications standard defined for a human interface device to correspond to the sequence of the plurality of keystroke inputs, the sequence of human interface device commands respectively interpretable by the remote electronic device as the characters of the sequence of text display characters;
displaying on the handheld device in response to the determining, a local presentation of the sequence of text display characters (306) substantially concurrently with the accepting the sequence of the plurality of keystrokes;
and
sending, from the handheld device to a remote device through a data communications interface conforming to the data communications standard, the sequence of human interface device commands (308), the sending being substantially concurrently with the displaying the sequence of text display characters.

**2.** The method of claim 1, the data communications interface comprising a short range communications link (150).

**3.** The method of claim 1, the determining comprising at least one of an auto-complete function, an auto-correction function, and a multiple character key resolution function (120, 304).

**4.** The method of claim 1, wherein the sequence of human interface device commands comprises at least one display location command, each at least one display location command indicating a location on the remote presentation at which to present a text display character (120).

**5.** The method of claim 1, the sequence of text display characters comprising a text over-writing command, the text over-writing command altering the local presentation of the sequence of text display characters by replacing at least one text display character occurring prior to the text over-writing command with at least one replacement text display character that follows the text over-writing command, and
the sequence of human interface device commands comprising at least one text over-writing human interface device command that corresponds to the text over-writing command, the text over-writing human interface device command specifying altering the remote presentation of the sequence of text display characters by replacing the at least one text display character with the at least one replacement text display character.

**6.** The method of claim 1, wherein the sequence of text display characters comprises a presentation of a plurality of selections to be displayed to the user (120), each selection of the plurality of selections comprising a respective replacement text to replace a selected text element within the text display characters,
the method further comprising:
accepting, at the handheld device, a user input corresponding to selecting a selected selection within the plurality of selections (310);
modifying the local presentation in response to accepting the user input corresponding to selecting (314); and
sending, from the handheld device to the remote device through the data communications interface, a modifying sequence of human interface device commands that specify modifying the remote presentation in response to accepting the user input corresponding to selecting (308).

**7.** A human interface device input controller configured to be located within a handheld device, the human interface device controller comprising:
a human interface device input interface (220) configured to accept a sequence of a plurality of keystroke inputs on a keyboard (104) of the handheld device (102);
a processor (224) configured to:
process the sequence of the plurality of keystroke inputs to determine:
a sequence of text display characters to present on a screen (304) of the handheld device to and
a sequence of human interface device commands (307) defined by a data communications standard defined for a human interface device to correspond to the sequence of the plurality of keystroke inputs, the sequence of human interface device commands respectively interpretable by the remote electronic device as the characters of the sequence of text display characters; a display (112) associated with the handheld device, the display configured to display in response to a determination by the processor of the sequence of text display characters, a local presentation of the sequence of text display characters (114), the display configured to display substantially concurrently with an acceptance of the human interface device input interface of the sequence of the plurality of keystrokes; and
a human interface device output interface (226) adapted to send, to a remote device through a data communications interface conforming to the data communications standard (150, 152), the sequence of human interface device commands, the human interface device output interface configured to send the sequence of human interface device commands substantially concurrently with a display by the display of the sequence of text display characters.

**8.** The human interface device controller of claim 7, the human interface device output comprising a short range communications link (150).

**9.** The human interface device controller of claim 7, wherein the processor is further configured to determine the sequence of text display characters by being configured to at least perform at least one of an auto-complete function, an auto-correction function, and a multiple character key resolution function (120).

**10.** The human interface device controller of claim 7, wherein the sequence of human interface device commands comprises at least one display location command, each at least one display location command indicating a location on the remote presentation at which to present a text display character.

**11.** The human interface device controller of claim 7, the sequence of text display characters comprising a text over-writing command, the human interface device controller being configured for the text over-writing command to alter the local presentation of the sequence of text display characters by replacing at least one text display character occurring prior to the text over-writing command with at least one replacement text display character that follows the text over-writing command, and
the sequence of human interface device commands comprising at least one text over-writing human interface device command that corresponds to the text over-writing command, the human interface device controller being configured for the text over-writing human interface device command to specify an alteration of the remote presentation of the sequence of text display characters by replacing the at least one text display character with the at least one replacement text display character.

**12.** The human interface device controller of claim 7, wherein the sequence of text display characters comprises a presentation of a plurality of selections to be displayed (120), each selection of the plurality of selections comprising a respective replacement text to replace a selected text element within the text display characters,
the processor further configured to:
accept a user input corresponding to selecting a selected selection within the plurality of selections (310);
modify the local presentation in response to an acceptance of the user input corresponding to selecting (314); and
send, to the remote device through the data communications interface, a modifying sequence of human interface device commands that specify modifying the remote presentation in response to accepting the user input corresponding to selecting (308).

**13.** A computer program for instructing a computer to perform the method of any one of claims 1, 2, 3, 4, 5, or 6.

**14.** The method of any of claims 1, 2, 3, 4, 5, or 6, wherein the data communications interface comprises one of a Universal Serial Bus or a Bluetooth interface, and the sequence of human interface device commands comprise commands defined for the Universal Serial Bus or the Bluetooth interface.

**15.** The human interface device controller of any of claims 7, 8, 9, 10, 11, or 12, wherein the data communications interface comprises one of a Universal Serial Bus or a Bluetooth interface, and the sequence of human interface device commands comprise commands defined for the Universal Serial Bus or the Bluetooth interface.
